# NEUE EUROPÄISCHE PATENTSCHRIFT

(11) **EP 3 301 138 B2**
(45) Veröffentlichungstag und Bekanntmachung des Hinweises auf die Entscheidung über den Einspruch: **16.02.2022**
(45) Hinweis auf die Patenterteilung: 08.05.2019
(21) Anmeldenummer: 16191982.4
(22) Anmeldetag: 30.09.2016
(51) Int. Cl.: C09D 133/08, C09D 133/10

(54) **WÄSSRIGE BEHANDLUNGSMASSE FÜR GEBÄUDEWANDUNGEN, -DECKEN ODER -BÖDEN**
AQUEOUS TREATMENT MASS FOR BUILDING WALLS, CEILINGS OR FLOORS
MASSE DE TRAITEMENT EN BASE AQUEUSE POUR CLOISONS DE BÂTIMENTS, PLAFONDS OU PLANCHERS

(43) Veröffentlichungstag der Anmeldung: 04.04.2018
(73) Patentinhaber: DAW SE, 64372 Ober-Ramstadt (DE)
(72) Erfinder: GROSSKOPF, Jan, 64367 Mühltal (DE); BRENNER, Thomas, 64367 Mühltal (DE); WEINHOLD, Petra, 64572 Büttelborn (DE)
(74) Vertreter: Metten, Karl-Heinz

(56) Entgegenhaltungen:
- EP-A1- 2 589 579
- EP-A1- 2 754 699
- EP-A1- 2 871 169
- EP-A1- 3 031 868
- EP-A1- 3 296 361
- EP-A2- 0 808 883
- WO-A1-00/73237
- WO-A1-96/17896
- WO-A1-02/085589
- WO-A1-2006/053640
- WO-A1-2010/026138
- WO-A1-2015/177558
- CN-A- 102 533 028
- CN-A- 105 419 507
- CN-A- 105 694 550
- RU-C1- 2 366 677
- US-A1- 2009 004 468
- US-A1- 2011 207 851
- US-A1- 2013 296 461
- US-A1- 2015 267 077
- M. Bock: "Polyurethanes for Coatings", European Coatings Literature, 1 January 2001 (2001-01-01), page 74,
- for Decorative Coatings, 2001, p.81-84; BASF, Formulation Additives by BASF, "Little helpers love great achievements - Practical Guide to Rheology Modifiers"; Römpp Chemie Lexikon "Bindemittel" und "Verdickungsmittel";
- Wikipedia: "Surfactant , Technical Data Sheets für BYK-345 BYK-346,.BYK-348, BYK-O22, BYK-024, Triton X-405, NeoCryl A639, Troysol MS2, Alberdingk Boley APU 1061, Rheolate 278, Acematt TS 100, BYK-7420 ES, Optiflow T1000
- Alberdingk UC 84 Rheovis PU 1214, Kronos 2190, Aquaflow NHS-300, Acrysol RM-SW, Viscalex HV30, Disparlon AQ-320 Tafigel PUR 62, Tafigel PUR 40, Aerosil A-300, SDS Nuosphere, Tylose H 10000 P2 und AlberdingkUSA UC 84.

## Beschreibung

Die vorliegende Erfindung betrifft eine wässrige Behandlungsmasse für Gebäudewandungen, -decken oder -böden, insbesondere eine Grundierungsmasse. Des Weiteren betrifft die Erfindung ein mit der erfindungsgemäßen wässrigen Behandlungsmasse versehenes Substrat sowie die Verwendung der erfindungsgemäßen wässrigen Behandlungsmasse als Grundierungsmasse. Außerdem betrifft die Erfindung die Verwendung der erfindungsgemäßen wässrigen Behandlungsmasse für die Verbesserung der Haftung oder die Gewährleistung eines einheitlichen Farbeindrucks von Farbanstrichen auf, insbesondere mineralischen, Untergründen oder für die Verfestigung von mineralischen Untergründen oder für die Vergleichmäßigung von ungleichmäßig saugenden, insbesondere mineralischen, Untergründen.

Seit langem ist man bestrebt, Farbtonqualität und Farbtonkonstanz von Gebäudeanstrichen zu verbessern. Dies betrifft Innenanstriche ebenso wie Außenanstriche. Hierbei sollen sich die gewünschten Eigenschaften idealerweise bei Anbringung auf einer Vielzahl an unterschiedlichen Untergründen wie solchen aus Zementmörtel, Beton oder Putzschichten einstellen. Insbesondere bei uneinheitlichen Untergründen, die sich beispielsweise beim Übergang von altverputzten zu neuverputzten Arealen oder bei der Reparatur bzw. Ausbesserung mittels Gipsverspachtelung ergeben können, besteht die Gefahr, nach dem Abtrocknen eines Farbanstrichs einen uneinheitlichen Farbeindruck zu erhalten.

Derartige Probleme versucht man unter anderem durch einen besonders dicken Farbauftrag in den Griff zu bekommen oder dadurch, dass ein Farbanstrich zwei- oder mehrfach aufgetragen wird. Hierdurch wird der Arbeits-, Zeit- und Kostenaufwand merklich erhöht. Auch können bei zu dick aufgetragenen Farbanstrichen ftaftungsproblemen und/oder unvorteilhafte Verlaufseigenschaften (Stichwort: "*sagging*") resultieren.

EP 2871 169 offenbart eine Dispersionsmasse, umfassend Polymerschaumpartikel, einen Leichtfüllstoff, ein Fasermaterial, ein organisches Bindemittel (Bindemitteldispersion) und Wasser.

Daher lag der vorliegenden Erfindung die Aufgabe zu Grunde, eine Lösung für die vorangehend genannten Probleme zu finden und den Fachmann insbesondere in die Lage zu versetzen, auf vielfältigen, uneinheitlichen Untergründen, insbesondere auch bei wechselnden Untergründen, mit einem insbesondere einmaligen Farbauftrag einen einheitlichen Farbanstrich zu erhalten. Insbesondere lag der Erfindung die Aufgabe zugrunde, auf vielfältigen, uneinheitlichen Untergründen, insbesondere auch bei wechselnden Untergründen mit einem Beschichtungsmasseauftrag, vorzugsweise einem einmaligen Beschichtungsmasseauftrag, eine einheitliche Untergrundvorbereitung zu gewährleisten.

Demgemäß wurde eine wässrige Behandlungsmasse für Gebäudewandungen, -decken oder- böden gemäß den Merkmalen des Patentanspruchs 1 gefunden. Bei der erfindungsgemäßen wässrigen Behandlungsmasse handelt es sich vorzugsweise um eine Grundierungsmasse oder die wässrige Behandlungsmasse stellt einen Bestandteil einer Grundierungsmasse dar. Die erfindungsgemäße wässrige Behandlungsmasse eignet sich insbesondere für die Behandlung von mineralischen Untergründen wie Betonsubstraten, z.B. Betonwänden, -decken oder -böden, von Putzbeschichtungen, gipsverspachtelten Arealen, Gipsplatten, Gipskartonplatten, ungebrannten Mauersteinen, Porenbetonsubstraten, Kalksandsteinsubstraten und dergleichen. Damit die erfindungsgemäße wässrige Verhandlungsmasse ihre Wirkung entfalten kann, beispielsweise in Bezug auf Haftungsverbesserung, Farbtonkonstanz aufgebrachter Farbanstriche und der Verbesserung der Qualität mit Farbanstrich in zu beschichtender Untergründe, ist es nicht notwendig, dass die erfindungsgemäße wässrige Behandlungsmasse auf dem behandelten Untergrund einen Schichtauftrag bildet. Vielmehr reicht es aus, wenn diese wässrige Behandlungsmasse, vorzugsweise oberflächennah, in den behandelten Untergrund, insbesondere mineralischen Untergrund eindringt bzw. diesen penetriert. Selbstverständlich kann in einer Ausführungsvariante die erfindungsgemäße wässrige Behandlungsmasse in einer Weise aufgetragen werden, dass nach dem Trocknungsvorgang auf dem behandelten Untergrund ein, insbesondere gleichmäßiger, Schichtauftrag verbleibt.

Der Wasseranteil der erfindungsgemäßen wässrigen Behandlungsmassen, bezogen auf das Gesamtgewicht dieser Behandlungsmasse, liegt üblicherweise im Bereich von 60 bis 96 Gew.-%. In bevorzugten Ausgestaltungen liegt der Wasseranteil im Bereich von 80 bis 92 Gew.-%.

In einer besonders zweckmäßigen Ausführungsform umfassen die erfindungsgemäßen wässrigen Behandlungsmasse ferner mindestens ein, insbesondere nichtionisches oberflächenaktives, Netz- und/oder Dispergiermittel. Besonders geeignete Netz- und/oder Dispergiermittel können dabei ausgewählt werden aus der Gruppe bestehend aus Natrium- oder Ammoniumpolyacrylaten, Kaliumpolyacrylaten, Polyphosphaten, EO/PO-Blockcopolymeren und deren beliebigen Mischungen. Bevorzugt wird unter den geeigneten Netz- und/oder Dispergiermitteln auf Ethylendiamin-EO/PO-Blockcopolymere zurückgegriffen.

Die Netz-und/oder Dispergiermittel der erfindungsgemäßen wässrigen Behandlungsmasse liegen darin im Allgemeinen in einer Menge im Bereich von 0 bis 3,0 Gew. -%, bevorzugt im Bereich von 0,1 bis 2 Gew.-% und besonders bevorzugt im Bereich von 0,5 bis 1 Gew.-%, jeweils bezogen auf den Feststoffanteil bzw. den nicht-wässrigen Anteil, auch Wirkstoffanteil genannt, vor. Der nicht-wässrige Anteil bzw. Wirkstoffanteil der erfindungsgemäßen wässrigen Behandlungsmasse kommt dann zum Zuge, wenn die Komponente der Behandlungsmasse, deren Gewichtsanteil zu bestimmen ist, bei Raumtemperatur nicht in fester Form vorliegt.

Mit der vorliegenden Erfindung sind auch solche wässrigen Behandlungsmassen umfasst, die ferner mindestens einen Füllstoff und/oder mindestens ein Farbmittel, insbesondere Pigment, enthalten. Mit den erfindungsgemäßen wässrigen Behandlungsmasse, insbesondere Grundierungsmassen, ist regelmäßig kein deckender Farbauftrag angestrebt. Da kann vielfach auf den Zusatz von Füllstoffen und/oder Farbmitteln, wie Pigmenten, vollständig verzichtet werden. Hierdurch werden die angestrebten Vorteile nicht beeinträchtigt. Allerdings hat es sich für viele Anwendungen als vorteilhaft erwiesen, den erfindungsgemäßen wässrigen Behandlungsmassen, insbesondere Grundierungsmassen, in geringen Mengen Füllstoffe und/oder Farbmittel, insbesondere Pigmente, zuzusetzen, um für den Bearbeiter diejenigen Areale sichtbar zu machen, die bereits mit der erfindungsgemäßen wässrigen Behandlungsmasse behandelt worden sind. Gleichwohl sind auch solche erfindungsgemäßen wässrigen Behandlungsmassen, insbesondere Grundierungsmassen, geeignet, die im Wesentlichen frei von Füllstoffen und/oder Farbmitteln, vorzugsweise Pigmenten, sind.

Für die erfindungsgemäßen wässrigen Behandlungsmassen greift man bevorzugt auf solche Verdicker zurück, die ausgewählt sind aus der Gruppe bestehend aus Polyacrylat-Verdickern, auch Acrylat-Verdicker genannt, insbesondere HASE-Polyacrylat-Verdickern, Polyurethan-Verdickern, modifizierten Polyharnstoff-Verdickern, Polysaccharid-Verdickem wie Cellulose-Verdickern, insbesondere auf Basis von Hydroxyethylcellulose und/oder Methylcellulose, Polyvinylalkohol-Verdickern, Polyetherpolyol-Verdickern und modifizierten Schichtsilikaten, insbesondere organisch modifizierten Schichtsilikaten, und beliebigen Mischungen hiervon. Bevorzugt wird hierbei auf Polyacrylat-Verdicker zurückgegriffen, wobei die Klasse der HASE-Polyacrylat-Verdicker besonders bevorzugt ist. Hierbei handelt es sich um hydrophob modifizierte Polyacrylat-Assoziativverdicker.

Unter den Acrylatverdickern sind sogenannte HASE-Verdicker (hydrophobically modified alkali soluble emulsion) bevorzugt, und zwar insbesondere auf Basis von Copolymeren enthaltend oder bestehend aus Methylmethacrylat und/oder Methacrylsäure und Ethylacrylat. HASE-Verdicker können z.B. gewonnen werden aus Methacrylsäure als hydrophilem Monomer, einem Alkylvinylether als hydrophobem Monomer sowie Ethylacrylat, Butylacrylat und/oder Methylmethacrylat als weiterem Monomer zur Einstellung eines optimalen Gleichgewichts zwischen Wasserempfindlichkeit und Wasserverträglichkeit. Auch können vernetzte HASE-Verdicker eingesetzt werden. Diese verfügen regelmäßig über eine eingeschränkte Wasserlöslichkeit. Besonders geeignete Acrylatverdicker, insbesondere der HASE-Acrylatverdicker, weisen ein zahlenmittleres Molekulargewicht Mₙ im Bereich von 100 bis 300 kDa, bevorzugt im Bereich von 150 bis 250 kDa, z.B. im Bereich von 170 bis 200 kDa, und/oder ein gewichtsmittleres Molekulargewicht Mₙ im Bereich von 400 bis 800 kDa, bevorzugt im Bereich von 500 bis 700 kDa, z.B. im Bereich von 550 bis 650 kDa, auf.

Geeignete Verdicker auf Polysaccharidbasis umfassen z.B. Cellulose, mikrokristalline Cellulose, Celluloseether und modifizierte Celluloseether, insbesondere hydrophob modifizierte Celluloseether, und auch Polysaccharide, die sich von den Galactomannosen ableiten, z.B. Polygalactomannosen, des Weiteren Polysaccharide auf Basis von Carrageen, Guarkernmehl, Xanthan und Johannisbrotkernmehl. Beispielhaft seien als modifizierte Celluloseether Methylcellulose, Hydroxypropylmethylcellulose, Hydroxyethylcellulose, Hydroxypropylcellulose, Ethylhydroxyethylcellulose und Natriumcarboxymethylcellulose, genannt. Als hydrophob modifizierte Celluloseether kommen z.B. die Reaktionsprodukte von Hydroxyethylcellulose oder Hydroxypropylcellulose mit dem Glycidylether von N-Ethyl-N-2-hydroxyethylperfluoroctansulfonamid (FC10-HEC) sowie nichtionische Celluloseether mit Methyl-, Hydroxyethyl- und Hydroxypropyl-Resten sowie mit einem langkettigen, über eine Etherbindung gebundenen Alkylrest mit 10 bis 24 Kohlenstoffatomen in Betracht.

Im einfachsten Fall basieren Polyurethan-Verdicker auf einem hydrophilen Mittelblock aus Poly(ethylenoxid) (PEO)-Einheiten, an den durch Umsetzung mit einem Diisocyanat und einem Fettalkohol über Urethanbindungen zwei hydrophobe Endsegmente angeknüpft wurden. Bei Polyurethan-Verdickern handelt es sich somit im Allgemeinen um nichtionische verzweigte oder unverzweigte Blockcopolymere aus Polyethylenoxid-Ketten, Polypropylenoxid-Ketten oder Poly(ethylenoxid-propylenoxid)-Ketten, die über Urethanbindungen miteinander verknüpft sind und die endständige langkettige Alkyl- oder Alkylengruppen mit 8 bis 30, vorzugsweise 10 bis 24 und besonders bevorzugt 12 bis 20 Kohlenstoffatomen oder Aryl- oder alkylierte Arylgruppen mit 6 bis 30, vorzugsweise 6 bis 20 Kohlenstoffatomen tragen. Typische Alkylgruppen sind beispielsweise Dodecyl- oder Stearyl-Gruppen, eine typische Alkylengruppe ist beispielsweise eine Oleylgruppe, eine typische Arylgruppe ist die Phenylgruppe und eine typische alkylierte Arylgruppe ist beispielsweise eine Nonylphenylgruppe. Geeignete Polyurethan-Verdicker sind dem Fachmann bekannt. Das Molekulargewicht solcher Polyurethanverdicker liegt üblicherweise im Bereich von 10⁴ bis 10⁵ g/mol.

Geeignete Verdicker auf Basis von Schichtsilikaten können ausgewählt sein aus der Gruppe bestehend aus Smectit, Montmorillonit, Hectorit und Bentonit oder deren Mischungen. Neben den herkömmlichen, d.h. den nicht organisch modifizierten bzw. nicht in delamierter Form vorliegenden Schichtsilikaten, kann man zusätzlich oder alternativ des Weiteren auch auf organisch modifizierte Schichtsilikate als Verdicker zurückgreifen. Organisch modifizierte Schichtsilikate sind dem Fachmann bekannt und sind auch im Handel erhältlich. Hierbei handelt es sich um sogenannte delaminierte Schichtsilikate, bei denen in der Schichtenstruktur, d.h. zwischen den Schichten kationische organische Verbindungen vorliegen. Man spricht hier auch von Interkalationsverbindungen. Besonders bevorzugt erhält man solche delaminierten Schichtsilikate mittels Modifizierung mit Alkylammonium- oder Ammoniumalkoxylat-Verbindungen.

Geeignete Polyether-Polyol-Verdicker sind dem Fachmann bekannt. Exemplarisch sei auf "Wässrige Siliconharz-Beschichtungssysteme für Fassaden", Wolfgang Schultze, 2. Aufl., Seiten 345 bis 347, verwiesen (ISBN 3-8169-1966-9).

In den erfindungsgemäßen wässrigen Behandlungsmasse liegen Verdicker vorzugsweise in einer Menge im Bereich von 0,1 bis 4 Gew.-%, bevorzugt im Bereich von 0,2 bis 3 Gew.-% und besonders bevorzugt im Bereich von 0,3 bis 2 Gew.-% und insbesondere im Bereich von 0,5 bis 1 Gew.-%, vor. Bei der vorangehend genannten Mengenangabe handelt es sich stets um den Feststoffanteil bzw. um den nicht-wässrigen Anteil der erfindungsgemäßen wässrigen Behandlungsmasse.

Enthält die erfindungsgemäße wässrige Behandlungsmasse ein organisches Bindemittel kommen hierfür bevorzugt wässrige Dispersion auf Basis von Homopolymeren und/oder Copolymeren enthaltend Acrylate, Methacrylate, Ethylen, Vinylacetat und/oder Styrol zum Einsatz. Bevorzugt sind wässrige Dispersion auf Basis von Reinacrylaten sowie insbesondere auf Basis von Copolymeren enthaltend Acrylate, Methacrylate und Styrol. Kommen bei den erfindungsgemäßen wässrigen Behandlungsmassen organische Bindemittel auf Basis wässriger Dispersionen zum Einsatz, kann diese Behandlungsmasse auch als Dispersionsbehandlungsmasse aufgefasst oder bezeichnet werden.

Bei den erfindungsgemäßen wässrigen Behandlungsmasse, die auf anorganischen Bindemitteln basieren, greift man regelmäßig auf wässrige Systeme enthaltend Wasserglas und/oder Kieselsol zurück.

Geeignete Kieselsole sind dem Fachmann bekannt. Kieselsole sind im Handel in Form wässriger kolloidaler Suspensionen von Polykieselsäuremolekülen erhältlich. Das Kieselsol ist vorzugsweise alkalisch und hat insbesondere vorzugsweise einen pH-Wert größer 9.

Grundsätzlich kommen als Wassergläser Natrium-, Kalium- und Lithiumwasserglas sowie deren Mischungen in Betracht. Bei Wasserglas handelt es sich z.B. um Reaktionsprodukte aus Alkalikarbonaten bzw. -hydroxiden mit Quarzsand. Diese werden kommerziell häufig in Form wässriger Lösungen angeboten. In diesen kommerziell erhältlichen wässrigen Lösungen liegt das Wasserglas im Allgemeinen mit einem 22 Gew.-%igen Feststoffanteil vor. Wasserglas kann grundsätzlich auch in Pulverform eingesetzt werden.

Die Bindemittel liegen in der erfindungsgemäßen wässrigen Behandlungsmasse, vorzugsweise in der Applikationsform dieser Behandlungsmasse, regelmäßig in einer Menge im Bereich von 0,5 bis 14 Gew.-% (Feststoffanteil), bezogen auf das Gesamtgewicht dieser Behandlungsmasse, vor. Werden in der erfindungsgemäßen wässrigen Behandlungsmasse organische Bindemittel eingesetzt, liegen diese darin bevorzugt in einer Menge im Bereich von 5 bis 12 Gew.-% (Feststoffanteil), besonders bevorzugt im Bereich von 7 bis 10 Gew.-%, bezogen auf das Gesamtgewicht der wässrigen Behandlungsmasse, vor. Kommen in der erfindungsgemäßen wässrigen Behandlungsmasse anorganische Bindemittel zum Einsatz, liegt deren Menge bevorzugt im Bereich von 0,1 bis 15 Gew.-% (Feststoffanteil), bezogen auf das Gesamtgewicht der wässrigen Behandlungsmasse.

Die erfindungsgemäßen wässrigen Behandlungssysteme können darüber hinaus auch Additive enthalten. Geeignete Additive sind dem Fachmann geläufig. Beispielsweise können bevorzugte Additive ausgewählt werden aus der Gruppe bestehend aus Entschäumern, Feuchthaltemitteln, Stabilisatoren, insbesondere pH-Stabilisatoren, Bioziden bzw. Konservierungsmitteln, Neutralisationsmitteln und beliebigen Mischungen hiervon.

Setzt man in den erfindungsgemäßen wässrigen Behandlungsmassen gezielt Biozide bzw. Konservierungsmittel ein, beispielsweise Fungizide und/oder Algizide, gelangt man nicht zuletzt aufgrund der sehr guten Penetrationseigenschaften die erfindungsgemäßen Behandlungsmassen zu sehr wirkungsvollen wässrigen Sanierbehandlungssystemen. Die erfindungsgemäßen wässrigen Behandlungsmassen können demgemäß auch für die biozide Behandlung von Gebäudeflächen, insbesondere Außenfassaden von Gebäuden, eingesetzt werden.

Des Weiteren zeichnen sich die erfindungsgemäßen wässrigen Behandlungsmassen in einer bevorzugten Ausführungsform auch dadurch aus, dass sie im Wesentlichen frei von Bioziden bzw. frei von Konservierungsmitteln sein können. Es wird vermutet, dass dieses auf die guten Penetrationseigenschaften der erfindungsgemäßen wässrigen Behandlungsmasse zurückzuführen ist. Hierbei sind solche erfindungsgemäßen wässrigen Behandlungsmassen bevorzugt, die im Wesentlichen frei von Topfkonservierungsmitteln sind. Besonders bevorzugt sind hierbei auch solche Behandlungsmassen, die frei von Topf- und Filmkonservierungsmitteln sind, wobei gemäß einer Ausgestaltung der Erfindung Behandlungsmassen, die frei von Konservierungsmitteln bzw. Bioziden sind, besonders geeignet sind. Die erfindungsgemäßen Behandlungsmassen werden im Sinne der vorliegenden Erfindung im Einklang mit der "Vergabegrundlage für Umweltzeichen" der RAL gGmbH betreffend "Emissionsarme Innenwandfarben RAL-UZ 102" (Ausgabe Januar 2015) als konservierungsmittelfrei angesehen, wenn darin keine Konservierungsmittel oder Konservierungsmittel, auf die Einzelsubstanz bezogen (einschließlich Formaldehyd), in einer Menge kleiner 2 ppm, sowie in Bezug auf CIT (5-Chlor-2-methyl-4-isothiazolin) in einer Menge kleiner 0,5 ppm enthalten sind. Die erfindungsgemäßen wässrigen Behandlungsmassen können demgemäß auch für die biozidfreie Behandlung von Gebäudeflächen, insbesondere Außenfassaden von Gebäuden, eingesetzt werden.

Für viele Anwendungen, insbesondere für solche, bei denen die erfindungsgemäßen wässrigen Behandlungsmassen im wesentlichen konservierungsmittelfrei oder im Wesentlichen frei von Topfkonservierungsmitteln eingesetzt werden, hat es sich als vorteilhaft erwiesen, auf solche Behandlungsmassen zurückzugreifen, die pH-Stabilisatoren enthalten. Geeignete pH-Stabilisatoren umfassen zum Beispiel Komplexierungsmittel, insbesondere mehrzähnige Komplexierungsmittel wie EDTA, und auch Alkylsilikonate. Geeignete Alkylsilikonate umfassen insbesondere Verbindungen der Formel (II) HO-[Si(R³)(OX)-O-]ₙH, worin der Rest R³ eine Alkylgruppe mit 1 bis 8 C-Atomen, X ein Kation und n eine Zahl im Bereich von 1 bis 6 bedeutet. Vorzugsweise liegt das Molgewicht dieser Alkylsilikonate im Bereich von 100 bis 500. In einer besonders geeigneten Ausgestaltung ist R3 eine Methyl-, Ethyl-, i-Propyl- oder n-Propylgruppe, vorzugsweise eine Methylgruppe. Als Kationen sind insbesondere die Alkalimetalle, insbesondere Kalium, geeignet. Beispielhaft seien als bevorzugte Alkylsilikonate Kaliummethylsilikonat und Natriumpro-pylsilikonat genannt. Als besonders vorteilhaft hat sich hier Kaliummethylsilikonat erwiesen.

Alternativ oder auch zusätzlich zu der Verwendung von pH-Stabilisatoren hat es sich insbesondere für solche erfindungsgemäßen wässrigen Behandlungsmassen, die im wesentlichen konservierungsmittelfrei oder im Wesentlichen frei von Topfkonservierungsmitteln eingesetzt werden sollen, als vorteilhaft erwiesen, auf Kieselsol und/oder Wasserglas als anorganisches Bindemittel, entweder alleine oder zusammen mit einem organischen Bindemittel, zurückzugreifen. Beispielsweise können die erfindungsgemäßen wässrigen Behandlungsmassen in einer geeigneten Ausführungsvariante Kieselsol und Kaliummethylsilikonat oder Wasserglas und Kaliummethylsilikonat enthalten.

Gemäß einer alternativen Ausgestaltung kann vorgesehen sein, dass die erfindungsgemäßen wässrigen Behandlungsmassen mindestens ein Filmkonservierungsmittel und vorzugsweise mindestens ein Filmkonservierungsmittel und kein Topfkonservierungsmittel enthalten. In einer weiteren bevorzugten Ausgestaltung können diese erfindungsgemäßen wässrigen Behandlungsmassen ganz allgemein mit Bioziden bzw. Konservierungsmitteln ausgestattet sein. Die vorangehend genannten Ausführungsformen können auch als sogenannte Sanierlösung zur Behandlung von Gebäudeaußenfassaden, beispielsweise solchen, die mit Algen und/oder Schimmel befallen sind, oder solchen, die vor Befall mit Algen und/oder Schimmel geschützt werden sollen, eingesetzt werden.

Die erfindungsgemäßen wässrigen Behandlungsmassen enthalten als zwingende Komponente mindestens ein Substratnetzadditiv. Substratnetzadditive im Sinne der vorliegenden Erfindung stellen amphiphile Substanzen dar, die in der Lage sind, die Oberflächenspannung von wässrigen flüssigen Phasen zu senken.

Die erfindungsgemäßen wässrigen Behandlungsmassen enthalten als geeignetes Substratnetzadditiv mindestens ein Polyethersiloxan-Copolymer und/oder mindestens einen, insbesondere nicht ionischen, alkoxylierten, insbesondere ethoxylierten und/oder butoxylierten, sekundären Alkohol und/oder mindestens einen alkoxylierten, insbesondere einen ethoxylierten und/oder butoxylierten, linearen oder verzweigten C9-C1 5-Alkohol.

Besonders bevorzugte Substratnetzadditive stellen solche alkoxylierten sekundären Alkohole dar, bei denen es sich um ethoxylierte und/oder butoxylierte sekundäre C11-C15-Alkohole, insbesondere ethoxylierte und butoxylierte sekundäre C11-C15-Alkohole, handelt.

Es wird vermutet, dass durch den Einsatz der Substratnetzadditive die Eindringtiefe der erfindungsgemäßen wässrigen Behandlungsmassen positiv beeinflusst wird.

Die Menge an Substratnetzadditiven liegt in den erfindungsgemäßen wässrigen Behandlungsmassen vorzugsweise im Bereich von 0,1 bis 4 Gew.-%, bevorzugt im Bereich von 0,2 bis 2,5 Gew.-% und besonders bevorzugt im Bereich von 0,4 bis 1,5 Gew.-%. Die Mengenangaben beziehen sich hierbei stets auf den Feststoffanteil.

Für viele Anwendungen hatte sich als sehr zweckmäßig erwiesen, den pH-Wert der erfindungsgemäßen wässrigen Behandlungsmasse auf einen Wert im Bereich von 8,0 bis 11,5 einzustellen. Bevorzugt liegt der pH-Wert der erfindungsgemäßen wässrigen Behandlungsmasse jedoch im Bereich von 8,5 bis 11,5 und besonders bevorzugt im Bereich von 9,0 bis 11,5. Ferner sind solche erfindungsgemäßen wässrigen Behandlungsmassen geeignet, bei denen der pH-Wert der erfindungsgemäßen wässrigen Behandlungsmasse im Bereich von 8,5 bis 11,0 oder im Bereich von 9,0 bis 10,0 liegt.

Soweit sich der pH-Wert nicht bereits aufgrund der Zugabe der Komponenten der erfindungsgemäßen wässrigen Behandlungsmasse einstellt, hat es sich als vorteilhaft erwiesen, durch Zugabe geeigneter basischer oder saurer Substanzen den pH-Wert auf die vorangehend genannten zweckmäßigen und bevorzugten Bereiche einzustellen.

Die erfindungsgemäßen wässrigen Behandlungsmassen, insbesondere in Form von Dispersionsbehandlungsmassen, zeichnen sich dadurch aus, dass sie eine Fließkurve, gebildet aus den auf der Abszisse aufgetragenen Schergeschwindigkeiten γ̇ und den auf der Ordinate aufgetragenen korrespondierenden Schubspannungswerten τ aufweisen, die über eine über den Bereich der Schergeschwindigkeiten von 20 bis 100 s-1 ermittelte mittlere Steigung im Bereich von 0,010 bis 0,10, vorzugsweise im Bereich von 0,020 bis 0,080 und besonders bevorzugt im Bereich von 0,030 bis 0,050 Pa·s verfügt und/oder die über eine über den Bereich der Schergeschwindigkeiten von 20 bis 200 s-1 ermittelte mittlere Steigung im Bereich von 0,010 bis 0,10, vorzugsweise im Bereich von 0,020 bis 0,080 und besonders bevorzugt im Bereich von 0,025 bis 0,070 Pa·s verfügt und/oder die über eine über den Bereich der Schergeschwindigkeiten von 20 bis 400 s-1 ermittelte mittlere Steigung im Bereich von 0,010 bis 0,080, bevorzugt im Bereich von 0,012 bis 0,060 und besonders bevorzugt im Bereich von 0,014 bis 0,040 Pa·s verfügt und/oder die über eine über den Bereich der Schergeschwindigkeiten von 1200 bis 1500 s-1 ermittelte mittlere Steigung kleiner oder gleich 0,025, vorzugsweise kleiner oder gleich 0,020 und besonders bevorzugt kleiner oder gleich 0,015 Pa·s verfügt und/oder dass die für die Behandlungsmasse, insbesondere Dispersionsbehandlungsmasse, ermittelte maximale Schubspannung τₘₐₓ oder dass die bei einer Schergeschwindigkeit von 1500 s-1 ermittelte Schubspannung τ im Bereich von 15 bis 80 Pa, vorzugsweise 20 bis 60 Pa, besonders bevorzugt im Bereich von 25 bis 50 Pa liegt.

In den erfindungsgemäßen wässrigen Behandlungsmassen enthalten diese insbesondere in den Applikationsformen, d.h. in der Form, wie sie z.B. als Grundierung auf einem Untergrund aufgebracht wird, 60 bis 96 Gew.-% , bevorzugt 80 bis 92 Gew.-%,Wasser, 0,5 bis 14 Gew.-%, bevorzugt 5 bis 12 Gew.-% , besonders bevorzugt 7 bis 10 Gew.-%, Bindemittel, insbesondere organisches Bindemittel, (Feststoffanteil), 0,1 bis 4 Gew.-%, bevorzugt 0,2 bis 3 Gew.-% und besonders bevorzugt 0,3 bis 2 Gew.-%, Verdicker (Feststoffanteil) und 0,1 bis 4 Gew.-%, bevorzugt 0,2 bis 2,5 Gew.-% und besonders bevorzugt 0,4 bis 1,5 Gew.-%, Substratnetzadditive (Feststoffanteil), 0 bis 3,0 Gew.-%, bevorzugt 0.1 bis 2 Gew.-% und besonders bevorzugt 0,5 bis 1 Gew.-%, Netz- und/oder Dispergiermittel (Feststoffanteil oder nicht-wässriger Anteil), wobei die die wässrige Behandlungsmasse bildenden Komponenten sich stets zu 100 Gew.-% ergänzen.

Selbstverständlich umfassen die erfindungsgemäßen wässrigen Behandlungsmassen auch Konzentrate, aus denen dann die tatsächlichen Applikationsformen durch Verdünnung mit Wasser gewonnen werden können. Beispielsweise lassen sich die vorangehend genannten Bereiche für die Feststoffanteile bzw. die nicht-wässrigen Anteile mit einem Faktor im Bereich von 2 bis 100, vorzugsweise im Bereich von 2 bis 50 oder im Bereich von 5 bis 20 multiplizieren, um zu geeigneten Konzentraten zu gelangen, und zwar unter gleichzeitiger korrespondierender Herabsetzung des Wasseranteils, wobei die diese wässrige Behandlungsmasse in Form eines Konzentrats bildenden Komponenten sich stets zu 100 Gew.-% ergänzen.

Mit den erfindungsgemäßen wässrigen Behandlungsmassen gelingt es demgemäß, ein solches Rheologieprofil einzustellen bzw. zu erhalten, das einerseits eine Penetration in einen, insbesondere mineralischen, Untergrund gestattet und das andererseits die Gefahr des Spritzens bzw. der Tropfenbildung beim Rollen-, Bürsten- oder Pinselauftrag minimiert sowie darüber hinaus die Aufnahme mit dem Werkzeug (z.B. Pinsel, Bürste oder Rolle) verbessert und effizienter gestaltet. Mit den erfindungsgemäßen wässrigen Behandlungsmassen geht folglich vorzugsweise ein strukturviskoses und/oder thixotropes Fließverhalten einher.

Werden Substratuntergründe, insbesondere mineralischen Substratuntergründe wie Putzbeschichtungen, Gipsplatten, Gipskartonplatten, z.B. Rigipsplatten, ungebrannten Mauersteine, Porenbetonsubstrate, Betonsubstrate, z.B. Betonwände, oder Kalksandsteinsubstrate oder mit der erfindungsgemäßen wässrigen Behandlungsmasse behandelt erhält man bei Auftrag eines Farbanstrichs auf den der behandelten Untergrund ein sehr hohes Maß an Farbkonstanz und auch Farbintensität. Von besonderem Vorteil ist hierbei auch, dass sich dieses Ergebnis ebenfalls bei uneinheitlichen Untergründen einstellt, beispielsweise bei einem Wechsel von einem hydrophoben zu einem hydrophilen Untergrund. Mit den erfindungsgemäßen wässrigen Behandlungsmassen wird auch die Gefahr der Rissbildung und des Abblätterns bzw. die Gefahr der Blasenbildung von Untergründen, beispielsweise gipsverspachtelten Untergründen, vermieden. Dies ist, ohne an eine Theorie gebunden zu sein, möglicherweise darauf zurückzuführen, dass die erfindungsgemäßen wässrigen Behandlungsmassen relativ tief in den behandelten Untergrund eindringen können und diesen verfestigen und/oder in seinem Eigenschaftsprofil vereinheitlichen. Die der Erfindung zugrunde liegende Aufgabe wird demgemäß ebenfalls gelöst durch einen Anstrich oder eine Grundierung, erhalten oder erhältlich mit der erfindungsgemäßen wässrigen Behandlungsmasse, insbesondere Dispersionsbehandlungsmasse, sowie durch ein Substrat, insbesondere mineralisches Substrat, das zunächst mit der erfindungsgemäßen wässrigen Behandlungsmasse und anschließend mit einem Farbanstrich versehen worden ist.

Die erfindungsgemäße wässrige Behandlungsmasse, insbesondere in Form einer Dispersionsbehandlungsmasse, eignet sich demgemäß für den spritz- und/oder nebelreduzierten, - armen oder -freien Auftrag auf eine Oberfläche mit einer Malerwalze, einer Bürste, Spritzsystem oder einem Pinsel.

Farbkonstanz und/oder Farbintensität stellen sich bei Vorbehandlung von Untergründen, insbesondere mineralischen Untergründen (dies schließt mineralische Untergründe enthaltend einen alten Farbanstrich ein), mit den erfindungsgemäßen wässrigen Behandlungsmassen insbesondere auch bei Anbringung von Farbanstrichen auf einer Vielzahl an unterschiedlichen Untergründen ein. Dies schließt auch solche Untergründe ein, bei denen sich beispielsweise an eine hydrophile Putzbeschichtung eine hydrophobierte Putzbeschichtung anschließt oder bei der ein Übergang von altverputzten zu neuverputzten Arealen vorliegt.

Demgemäß ist von Vorteil, dass sich mit den erfindungsgemäßen wässrigen Behandlungsmassen auch sehr große Flächen aller herkömmlichen Untergründe leicht, sicher und sauber verarbeiten bzw. grundieren lassen. Es gelingt ein sehr effizienter Materialeinsatz, d.h. auch mit relativ wenig wässriger Behandlungsmasse pro behandelter Fläche stellen sich die beschriebenen vorteilhaften Eigenschaften ein. Die erfindungsgemäße wässrige Behandlungsmasse zeichnet sich folglich durch eine ausgeprägte Verarbeitungsfreundlichkeit aus. Regelmäßig ist es überhaupt nicht erforderlich, dass die wässrige Behandlungsmasse einen Schichtauftrag liefert, vielmehr reicht es aus, dass die wässrige Behandlungsmasse in den Untergrund eindringt. Durch das mit den erfindungsgemäßen wässrigen Behandlungsmassen zugängliche Rheologieprofil gestaltet sich der Behandlungsvorgang, sei es mittels Roll-, Bürsten- oder Spritzapplikation besonders leicht. Hiermit geht regelmäßig auch eine Zeitersparnis gegenüber herkömmlichen Materialien und Verfahren einher. Aufgrund der reduzierten Spritzneigung, beispielsweise bei der Rollapplikation, sind in weitaus geringerem Umfang Abdeckarbeiten erforderlich. Und aufgrund der guten Penetrationseigenschaften der erfindungsgemäßen wässrigen Behandlungsmassen können instabile, spröde oder brüchige Untergründe und auch saugende Untergründe verfestigt werden. Hierdurch wird das Erscheinungsbild hierauf applizierter Farbanstriche wesentlich verbessert. Insbesondere trägt die erfindungsgemäße wässrige Behandlungsmasse zu einer Nivellierung der Saugfähigkeit des behandelten, insbesondere mineralischen, Untergrunds bei. Auch gelingt selbst auf glatten Untergründen bei Vorbehandlung mit der erfindungsgemäßen wässrigen Behandlungsmasse eine bessere Haftung. Von besonderem Vorteil ist überdies, dass sich die vorteilhaften Eigenschaften auch bei Applikation der erfindungsgemäßen wässrigen Behandlungsmassen auf Altanstrichen einstellen. Die erfindungsgemäßen wässrigen Behandlungsmasse eignen sich sowohl für den Innen- wie auch für den Außeneinsatz. Schließlich wird bei Einsatz der erfindungsgemäßen wässrigen Behandlungsmassen auch kein Ablaufen "in Fahnen" auf dem Untergrund mehr beobachtet. Zusammenfassend kann festgehalten werden, dass sich die erfindungsgemäßen wässrigen Behandlungsmassen, insbesondere Dispersionsbehandlungsmassen, für die Vergleichmäßigung von ungleichmäßig saugenden, insbesondere mineralischen, Untergründen im Außen- und/oder Innenbereich und/oder für die Vergleichmäßigung der Kapillarleitfähigkeit von, insbesondere mineralischen, Untergründen im Außen- und/oder Innenbereich mit variierenden kapillarleitfähigen Eigenschaften und/oder für die Verfestigung von und/oder Haftungsverbesserung auf, insbesondere mineralischen, Untergründen im Außen- und/oder Innenbereich und/oder für die Gewährleistung eines einheitlichen Farbeindrucks von Farbanstrichen auf, insbesondere mineralischen, Untergründen im Außen- und/oder Innenbereich eignen, wobei die mineralischen Untergründe insbesondere ausgewählt sind aus der Gruppe bestehend aus Putzbeschichtungen, Gipsplatten, Gipskartonplatten, ungebrannten Mauersteinen, Porenbetonsubstraten, Betonsubstraten und Kalksandsteinsubstraten.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Wässrige Behandlungsmasse, insbesondere Dispersionsbehandlungsmasse, für Gebäudewandungen, -decken oder -böden, insbesondere Grundierungsmasse, enthaltend
mindestens ein anorganisches und/oder organisches Bindemittel,
mindestens einen Verdicker, insbesondere Polyacrylat-Verdicker,
mindestens ein Substratnetzadditiv und
wobei das Substratnetzadditiv mindestens ein Polyethersiloxan-Copolymer und/oder mindestens einen alkoxylierten sekundären Alkohol und/oder mindestens einen alkoxylierten linearen oder verzweigten C9-C15- Alkohol umfasst und eine amphiphile Substanz darstellt, die in der Lage ist, die Oberflächenspannung von wässrigen flüssigen Phasen zu senken,
wobei die Behandlungsmasse, insbesondere Dispersionsbehandlungsmasse, eine Fließkurve, gebildet aus den auf der Abszisse aufgetragenen Schergeschwindigkeiten und den auf der Ordinate aufgetragenen korrespondierenden Schubspannungswerten τ aufweist,
die über eine über den Bereich der Schergeschwindigkeiten von 20 bis 100 s-1 ermittelte mittlere Steigung im Bereich von 0,010 bis 0,10 Pa·s verfügt und/oder die über eine über den Bereich der Schergeschwindigkeiten von 20 bis 200 s-1 ermittelte mittlere Steigung im Bereich von 0,010 bis 0,10 Pa·s verfügt und/oder die über eine über den Bereich der Schergeschwindigkeiten von 20 bis 400 s-1 ermittelte mittlere Steigung im Bereich von 0,010 bis 0,080 Pa·s verfügt und/oder die über eine über den Bereich der Schergeschwindigkeiten im Bereich von 1200 bis 1500 s-1 ermittelte mittlere Steigung kleiner oder gleich 0,025 Pa·s verfügt und/oder dass die für die Behandlungsmasse, insbesondere Dispersionsbehandlungsmasse, ermittelte maximale Schubspannung τmax oder dass die bei einer Schergeschwindigkeit von 1500 s-1 ermittelte Schubspannung τ im Bereich von 15 bis 80 Pa liegt.

2. Wässrige Behandlungsmasse nach Anspruch 1, ferner umfassend mindestens ein, insbesondere nichtionisches oberflächenaktives, Netz- und/oder Dispergiermittel, insbesondere ausgewählt aus der Gruppe bestehend aus Natrium-oder Ammoniumpolyacrylaten, Kaliumpolyacrylaten, Polyphosphaten, EO/PO-Blockcopolymeren, vorzugsweise Ethylendiamin-EO/PO-Blockcopolymeren, und deren beliebigen Mischungen.

3. Wässrige Behandlungsmasse nach Anspruch 1 oder 2, **dadurch gekennzeichnet, dass**
der Verdicker ausgewählt ist aus der Gruppe bestehend aus Polyacrylat-Verdickern, insbesondere HASE-Polyacrylat-Verdickern, Polyurethan-Verdickern, modifizierten Polyharnstoff-Verdickern, Polysaccharid-Verdickern, beispielsweise Cellulose-Verdickern, insbesondere auf Basis von Hydroxyethylcellulose und/oder Methylcellulose, Polyvinylalkohol-Verdickern, Polyetherpolyol-Verdickern und modifizierten Schichtsilikaten, insbesondere organisch modifizierten Schichtsilikaten, und beliebigen Mischungen hiervon.

4. Wässrige Behandlungsmasse nach einem der vorangehenden Ansprüche, **dadurch gekennzeichnet, dass**
das organische Bindemittel eine wässrige Dispersion auf Basis von Copolymeren und/ oder Homopolymeren enthaltend Acrylate, Methacrylate, Ethylen, Vinylacetat und/oder Styrol darstellt, insbesondere auf Basis von Reinacrylaten und/oder auf Basis von Copolymeren enthaltend Acrylate, Methacrylate und Styrol, und/oder dass
das anorganische Bindemittel auf einem wässrigen System enthaltend Wasserglas und/oder Kieselsol basiert.

5. Wässrige Behandlungsmasse nach einem der vorangehenden Ansprüche, **dadurch gekennzeichnet, dass**
die Additive ausgewählt sind aus der Gruppe bestehend aus Entschäumern, Feuchthaltemitteln, Stabilisatoren, insbesondere pH-Stabilisatoren, Neutralisationsmitteln Bioziden, insbesondere Konservierungsmitteln, und beliebigen Mischungen hiervon.

6. Wässrige Behandlungsmasse nach einem der vorangehenden Ansprüche, **dadurch gekennzeichnet, dass**
das Substratnetzadditiv mindestens einen, insbesondere nicht ionischen, ethoxylierten und/oder butoxylierten sekundären Alkohol und/oder mindestens einen ethoxylierten und/oder butoxylierten linearen oder verzweigten C9-C15-Alkohol, umfasst.

7. Wässrige Behandlungsmasse nach Anspruch 6, **dadurch gekennzeichnet, dass** der mindestens eine alkoxylierte sekundäre Alkohol mindestens einen ethoxylierten und/oder butoxylierten sekundären C11-C15-Alkohol umfasst.

8. Wässrige Behandlungsmasse nach einem der vorangehenden Ansprüche, enthaltend
60 bis 96 Gew.-%, bevorzugt 80 bis 92 Gew.-%, Wasser,
0,5 bis 14 Gew.-%, bevorzugt 5 bis 12 Gew.-%, besonders bevorzugt 7 bis 10 Gew.-%, Bindemittel, insbesondere organisches Bindemittel, (Feststoffanteil),
0,1 bis 4 Gew.-%, bevorzugt 0,2 bis 3 Gew.-% und besonders bevorzugt 0,3 bis 2 Gew.-%, Verdicker (Feststoffanteil) und
0,1 bis 4 Gew.-%, bevorzugt 0,2 bis 2,5 Gew.-% und besonders bevorzugt 0,4 bis 1,5 Gew.-%, Substratnetzadditive (Feststoffanteil),
0 bis 3,0 Gew.-%, bevorzugt 0,1 bis 2 Gew.-% und besonders bevorzugt 0,5 bis 1 Gew.-%, Netz- und/oder Dispergiermittel (Feststoffanteil oder nicht-wässriger Anteil),
wobei die die wässrige Behandlungsmasse bildenden Komponenten sich stets zu 100 Gew.-% ergänzen.

9. Wässrige Behandlungsmasse nach einem der vorangehenden Ansprüche, **dadurch gekennzeichnet, dass**
die Behandlungsmasse, insbesondere Dispersionsbehandlungsmasse, eine Fließkurve, gebildet aus den auf der Abszisse aufgetragenen Schergeschwindigkeiten und den auf der Ordinate aufgetragenen korrespondierenden Schubspannungswerten τ aufweist,
die über eine über den Bereich der Schergeschwindigkeiten von 20 bis 100 s-1 ermittelte mittlere Steigung im Bereich von 0,020 bis 0,080 und bevorzugt im Bereich von 0,030 bis 0,050 Pa·s verfügt und/oder
die über eine über den Bereich der Schergeschwindigkeiten von 20 bis 200 s-1 ermittelte mittlere Steigung im Bereich von von 0,020 bis 0,080 und bevorzugt im Bereich von 0,025 bis 0,070 Pa·s verfügt und/oder
die über eine über den Bereich der Schergeschwindigkeiten von 20 bis 400 s-1 ermittelte mittlere Steigung im Bereich von von 0,012 bis 0,060 und bevorzugt im Bereich von 0,014 bis 0,040 Pa·s verfügt und/oder
die über eine über den Bereich der Schergeschwindigkeiten im Bereich von 1200 bis 1500 s-1 ermittelte mittlere Steigung kleiner oder gleich 0,020 und bevorzugt kleiner oder gleich 0,015 Pa·s verfügt und/oder dass die für die Behandlungsmasse, insbesondere Dispersionsbehandlungsmasse, ermittelte maximale Schubspannung τmax oder dass die bei einer Schergeschwindigkeit von 1500 s-1 ermittelte Schubspannung τ im Bereich von 20 bis 60 Pa, bevorzugt im Bereich von 25 bis 50 Pa liegt.

10. Wässrige Behandlungsmasse nach einem der vorangehenden Ansprüche, **dadurch gekennzeichnet, dass**
diese eine Grundierung darstellt oder bildet oder Bestandteil hiervon ist.

11. Wässrige Behandlungsmasse nach einem der vorangehenden Ansprüche, **dadurch gekennzeichnet, dass**
diese einen pH-Wert im Bereich von 8,0 bis 11,5, vorzugsweise im Bereich von 8,5 bis 11,5 und besonders bevorzugt im Bereich von 9,0 bis 11,50 aufweist oder auf einen pH-Wert im Bereich von 8,0 bis 11,5, vorzugsweise im Bereich von 8,5 bis 11,5 und besonders bevorzugt im Bereich von 9,0 bis 11,5, eingestellt ist.

12. Wässrige Behandlungsmasse nach einem der vorangehenden Ansprüche, **dadurch gekennzeichnet, dass**
diese frei von Topf- und Filmkonservierungsmitteln, bevorzugt frei von Konservierungsmitteln, ist.

13. Wässrige Behandlungsmasse nach einem der vorangehenden Ansprüche, insbesondere nach einem der Ansprüche 1 bis 11, **dadurch gekennzeichnet, dass** diese Filmkonservierungsmittel, vorzugsweise Filmkonservierungsmittel und keine Topfkonservierungsmittel, und besonders bevorzugt Konservierungsmittel, enthält.

14. Wässrige Behandlungsmasse nach einem der vorangehenden Ansprüche, ferner umfassend Füllstoffe und/oder Farbmittel, insbesondere Pigmente oder dass diese frei von Füllstoffen und/oder Farbmitteln, vorzugsweise Pigmenten, ist.

15. Anstrich oder Grundierung, erhalten oder erhältlich mit der wässrigen Behandlungsmasse, insbesondere Dispersionsbehandlungsmasse, nach einem der vorangehenden Ansprüche.

16. Beschichtetes Substrat, insbesondere beschichtetes mineralisches Substrat, erhalten durch Behandeln eines Substrats, insbesondere mineralischen Substrats, mit der wässrigen Behandlungsmasse nach einem der Ansprüche 1 bis 14, und Versehen des behandelten Substrats mit einem Farbanstrich.

17. Verwendung der Behandlungsmasse, insbesondere Dispersionsbehandlungsmasse, nach einem der Ansprüche 1 bis 14 für den spritz-und/oder nebelreduzierten, -armen oder -freien Auftrag auf eine Oberfläche mit einer Malerwalze, Bürste, Spritzsystem oder einem Pinsel.

18. Verwendung der Behandlungsmasse, insbesondere Dispersionsbehandlungsmasse, nach einem der Ansprüche 1 bis 14 für die Vergleichmäßigung von ungleichmäßig saugenden, insbesondere mineralischen, Untergründen im Außen- und/oder Innenbereich und/oder für die Vergleichmäßigung der Kapillarleitfähigkeit von, insbesondere mineralischen, Untergründen im Außen- und/oder Innenbereich mit variierenden kapillarleitfähigen Eigenschaften und/oder für die Verfestigung von und/oder Haftungsverbesserung auf, insbesondere mineralischen, Untergründen im Außen- und/oder Innenbereich und/oder für die Gewährleistung eines einheitlichen Farbeindrucks von Farbanstrichen auf, insbesondere mineralischen, Untergründen im Außen- und/oder Innenbereich, wobei die mineralischen Untergründe insbesondere ausgewählt sind aus der Gruppe bestehend aus Putzbeschichtungen, Gipsplatten, Gipskartonplatten, ungebrannten Mauersteinen, Porenbetonsubstraten, Betonsubstraten und Kalksandsteinsubstraten.

19. Verwendung der Behandlungsmasse, insbesondere Dispersionsbehandlungsmasse, nach einem der Ansprüche 1 bis 14, enthaltend mindestens ein Biozid, als wässriges Sanierbehandlungssystem oder für die biozide Behandlung von Gebäudeflächen, insbesondere Außenfassaden von Gebäuden.

## Claims

1. An aqueous treatment mass, in particular emulsion treatment mass, for walls, ceilings or floors of buildings, in particular priming mass, containing at least one inorganic and/or organic binder,
at least one thickener, in particular polyacrylate thickener,
at least one substrate wetting additive and
wherein the substrate wetting additive comprises at least one polyethersiloxane copolymer and/or at least one alkoxylated secondary alcohol and/or at least one alkoxylated linear or branched C₉-C₁₅ alcohol and
is an amphiphilic substance which is capable of reducing the surface tension of aqueous liquid phases,
wherein the treatment mass, in particular emulsion treatment mass, has a flow curve, formed from the shear rates plotted on the x-axis and the corresponding shear stress values τ plotted on the γ-axis, which has an average gradient,
determined over the range of shear rates from 20 to 100 s-1, in the range from 0.010 to 0.10 Pa·s and/or which has an average gradient, determined over the range of shear rates from 20 to 200 s-1, in the range from 0.010 to 0.10 Pa·s and/or which has an average gradient, determined over the range of shear rates from 20 to 400 s-1, in the range from 0.010 to 0.080 Pa·s and/or which has an average gradient, determined over the range of shear rates in the range from 1200 to 1500 s-1, of less than or equal to 0.025 Pa·s and/or in that the maximum shear stress τ determined for the treatment mass, in particular emulsion treatment mass, or in that the shear stress τ determined at a shear rate of 1500 s-1 is in the range from 15 to 80 Pa.

2. The aqueous treatment mass according to Claim 1, further comprising at least one, in particular nonionic surface-active, wetting and/or dispersing agent, in particular selected from the group consisting of sodium or ammonium polyacrylates, potassium polyacrylates, polyphosphates, EO/PO block copolymers, preferably ethylenediamine EO/PO block copolymers, and any mixtures thereof.

3. The aqueous treatment mass according to Claim 1 or 2, **characterized in that** the thickener is selected from the group consisting of polyacrylate thickeners, in particular HASE polyacrylate thickeners, polyurethane thickeners, modified polyurea thickeners, polysaccharide thickeners, for example cellulose thickeners, in particular based on hydroxyethylcellulose and/or methylcellulose, polyvinyl alcohol thickeners, polyether polyol thickeners and modified phyllosilicates, in particular organically modified phyllosilicates, and any mixtures thereof.

4. The aqueous treatment mass according to any one of the preceding claims,
**characterized in that**
the organic binder is an aqueous dispersion based on copolymers and/or homopolymers containing acrylates, methacrylates, ethylene, vinyl acetate and/or styrene, in particular based on pure acrylates and/or based on copolymers containing acrylates, methacrylates and styrene, and/or **in that** the inorganic binder is based on an aqueous system containing water glass and/or silica sol.

5. The aqueous treatment mass according to any one of the preceding claims,
**characterized in that**
the additives are selected from the group consisting of defoamers, humectants, stabilizers, in particular pH stabilizers, neutralizing agents, biocides, in particular preservatives, and any mixtures thereof.

6. The aqueous treatment mass according to any one of the preceding claims,
**characterized in that**
the substrate wetting additive comprises at least one, in particular nonionic, ethoxylated and/or butoxylated secondary alcohol and/or at least one ethoxylated and/or butoxylated linear or branched C₉-C₁₅ alcohol.

7. The aqueous treatment mass according to Claim 6, **characterized in that**
the at least one alkoxylated secondary alcohol comprises at least one ethoxylated and/or butoxylated secondary C₁₁-C₁₅ alcohol.

8. The aqueous treatment mass according to any one of the preceding claims, containing
60 to 96 wt.%, preferably 80 to 92 wt.%, water,
0.5 to 14 wt.%, preferably 5 to 12 wt.%, particularly preferably 7 to 10 wt.%, binder, in particular organic binder (solids content),
0.1 to 4 wt.%, preferably 0.2 to 3 wt.% and particularly preferably 0.3 to 2 wt.%, thickener (solids content) and
0.1 to 4 wt.%, preferably 0.2 to 2.5 wt.% and particularly preferably 0.4 to 1.5 wt.%, substrate wetting additives (solids content),
0 to 3.0 wt.%, preferably 0.1 to 2 wt.% and particularly preferably 0.5 to 1 wt.%, wetting and/or dispersing agent (solids content or non-aqueous content),
wherein the components forming the aqueous treatment mass always add up to 100 wt.%.

9. The aqueous treatment mass according to any one of the preceding claims, **characterized in that**
the treatment mass, in particular emulsion treatment mass, has a flow curve, formed from the shear rates plotted on the x-axis and the corresponding shear stress values τ plotted on the γ-axis, which has an average gradient, determined over the range of shear rates from 20 to 100 s-1, in the range from 0.020 to 0.080 and preferably in the range from 0.030 to 0.050 Pa·s and/or which has an average gradient, determined over the range of shear rates from 20 to 200 s-1, in the range from 0.020 to 0.080 and preferably in the range from 0.025 to 0.070 Pa·s and/or which has an average gradient, determined over the range of shear rates from 20 to 400 s-1, in the range from from 0.012 to 0.060 and preferably in the range from 0.014 to 0.040 Pa·s and/or which has an average gradient, determined over the range of shear rates in the range from 1200 to 1500 s-1, of less than or equal to 0.020 and preferably less than or equal to 0.015 Pa·s and/or **in that** the maximum shear stress τ determined for the treatment mass, in particular emulsion treatment mass, or **in that** the shear stress τ determined at a shear rate of 1500 s-1 is in the range from 20 to 60 Pa, preferably in the range from 25 to 50 Pa.

10. The aqueous treatment mass according to any one of the preceding claims,
**characterized in that**
it is or forms a primer or is a component thereof.

11. The aqueous treatment mass according to any one of the preceding claims,
**characterized in that**
it has a pH in the range from 8.0 to 11.5, preferably in the range from 8.5 to 11.5 and particularly preferably in the range from 9.0 to 11.50 or is adjusted to a pH in the range from 8.0 to 11.5, preferably in the range from 8.5 to 11.5 and particularly preferably in the range from 9.0 to 11.5.

12. The aqueous treatment mass according to any one of the preceding claims,
**characterized in that**
it contains no in-can and film preservatives, preferably no preservatives.

13. The aqueous treatment mass according to any one of the preceding claims, in particular according to any one of Claims 1 to 11, **characterized in that** it contains film preservatives, preferably film preservatives and no in-can preservatives, and particularly preferably preservatives.

14. The aqueous treatment mass according to any one of the preceding claims, further comprising
fillers and/or colorants, in particular pigments or in that said mass contains no fillers and/or colorants, preferably pigments.

15. A coating or primer obtained or obtainable with the aqueous treatment mass, in particular emulsion treatment mass, according to any one of the preceding claims.

16. A coated substrate, in particular coated mineral substrate, obtained by treating a substrate, in particular mineral substrate, with the aqueous treatment mass according to any one of Claims 1 to 14, and providing the treated substrate with a paint coating.

17. A use of the treatment mass, in particular emulsion treatment mass, according to any one of Claims 1 to 14 for application involving fewer, little or no splashes and/or mist onto a surface using a paint roller, brush, spraying system or paintbrush.

18. A use of the treatment mass, in particular emulsion treatment mass, according to any one of Claims 1 to 14 for equalizing unevenly absorbent, in particular mineral, substrates in outdoor and/or indoor areas and/or for equalizing the capillary conductivity of, in particular mineral, substrates in outdoor and/or indoor areas which have varying capillary conductivity properties and/or for consolidating and/or improving adhesion to, in particular mineral, substrates in outdoor and/or indoor areas and/or for ensuring a uniform color appearance of paint coatings on, in particular mineral, substrates in outdoor and/or indoor areas, wherein the mineral substrates are selected in particular from the group consisting of render coatings, gypsum board, plasterboard, unfired bricks, aerated concrete substrates, concrete substrates and sand-lime brick substrates.

19. A use of the treatment mass, in particular emulsion treatment mass, according to any one of Claims 1 to 14, containing at least one biocide, as an aqueous renovation treatment system or for the biocidal treatment of building surfaces, in particular exterior facades of buildings.

## Revendications

1. Masse de traitement en base aqueuse, en particulier masse de traitement à dispersion, pour cloisons, plafonds ou sols de bâtiments, en particulier masse d'apprêt, comprenant
au moins un liant inorganique et/ou organique,
au moins un épaississant, en particulier un épaississant polyacrylate,
au moins un additif mouillant de substrat et
l'additif mouillant de substrat comprenant au moins un copolymère de polyéthersiloxane et/ou
au moins un alcool secondaire alkoxylé et/ou au moins un alcool C₉-C₁₅ alkoxylé linéaire ou ramifié et
représentant une substance amphiphile, laquelle est en mesure de baisser la tension de surface de phases aqueuses liquides,
la masse de traitement, en particulier la masse de traitement à dispersion présente une courbe d'écoulement, formée à partir des vitesses de cisaillement reportées sur l'abscisse et à partir des contraintes de cisaillement τ correspondantes reportées sur l'ordonnée, disposant d'une pente moyenne dans la plage de 0,010 à 0,10 Pa·s,
déterminée sur la plage de vitesses de cisaillement de 20 à 100 s-1,
et/ou d'une pente moyenne dans la plage de 0,010 à 0,10 Pa·s, déterminée sur la plage de vitesses de cisaillement de 20 à 200 s-1,
et/ou d'une pente moyenne dans la plage de 0,010 à 0,080 Pa·s, déterminée sur la plage de vitesses de cisaillement de 20 à 400 s-1,
et/ou d'une pente moyenne inférieure ou égale à 0,025 Pa·s, déterminée sur la plage de vitesses de cisaillement de 1200 à 1500 s-1,
et/ou en ce que la contrainte de cisaillement τ maximale déterminée pour la masse de traitement, en particulier la masse de traitement à dispersion, ou en ce que la contrainte de cisaillement τ déterminée pour une vitesse de cisaillement de 1500 s-1 se trouve dans la plage de de 15 à 80 Pa.

2. Masse de traitement en base aqueuse selon la revendication 1, comprenant en outre au moins un agent mouillant et/ou dispersant, en particulier tensioactif non ionique, en particulier sélectionné parmi le groupe se composant de polyacrylates de sodium ou d'ammonium, de polyacrylates de potassium, de polyphosphates, de copolymères à blocs EO/PO, de préférence de copolymères à blocs EO/PO éthylènediamine, et de leurs mélanges quelconques.

3. Masse de traitement en base aqueuse selon la revendication 1 ou 2, **caractérisée en ce que**
l'épaississant est sélectionné parmi le groupe se composant d'épaississants polyacrylates, en particulier d'épaississants polyacrylates HASE, d'épaississants polyuréthanes, d'épaississants polyurées modifiés, d'épaississants polysaccharides, par exemple d'épaississants de cellulose, en particulier à base d'hydroxyéthylcellulose et/ou de méthylcellulose, d'épaississants polyvinylalcools, d'épaississants polyétherpolyols et de phyllosilicates modifiés, en particulier de phyllosilicates organiques modifiés, et de mélanges quelconques de ceux-ci.

4. Masse de traitement en base aqueuse selon l'une quelconque des revendications précédentes, **caractérisée en ce que**
le liant organique représente une dispersion aqueuse à base de copolymères et/ou d'homopolymères, comprenant des acrylates, des méthacrylates, des éthylènes, des acétates de vinyle et/ou des styrènes, en particulier à base d'acrylates purs et/ou à base de copolymères comprenant des acrylates, des méthacrylates et des styrènes, et/ou **en ce que** le liant inorganique est basé sur un système aqueux comprenant du verre soluble et/ou du gel de silice.

5. Masse de traitement en base aqueuse selon l'une quelconque des revendications précédentes, **caractérisée en ce que**
les additifs sont sélectionnés parmi le groupe se composant d'antimoussants, d'humectants, de stabilisants, en particulier de stabilisants de pH, de neutralisants, de biocides, en particulier de conservateurs, et de mélanges quelconques de ceux-ci.

6. Masse de traitement en base aqueuse selon l'une quelconque des revendications précédentes, **caractérisée en ce que**
l'additif mouillant de substrat comprend au moins un alcool secondaire éthoxylé et/ou butoxylé, en particulier non ionique, et/ou au moins un alcool C₉-C₁₅ éthoxylé et/ou butoxylé linéaire ou ramifié.

7. Masse de traitement en base aqueuse selon la revendication 6, **caractérisée en ce que** l'au moins un alcool secondaire alkoxylé comprend au moins un alcool C11-C15 secondaire éthoxylé et/ou butoxylé.

8. Masse de traitement en base aqueuse selon l'une quelconque des revendications précédentes, comprenant
de 60 à 96 % massique, de préférence de 80 à 92 % massique d'eau,
de 0,5 à 14 % massique, de préférence de 5 à 12 % massique, en particulier de préférence de 7 à 10 % massique de liant, en particulier de liant organique (teneur en matières solides),
de 0,1 à 4 % massique, de préférence de 0,2 à 3 % massique, et en particulier de préférence de 0,3 à 2 % massique d'épaississant (teneur en matières solides) et
de 0,1 à 4 % massique, de préférence de 0,2 à 2,5 % massique, et en particulier de préférence de 0,4 à 1,5 % massique d'additifs mouillants de substrat (teneur en matières solides),
de 0 à 3,0 % massique, de préférence de 0,1 à 2 % massique, et en particulier de préférence de 0,5 à 1 % massique d'agent mouillant et/ou dispersant (teneur en matières solides ou teneur non aqueuse),
les composants formant la masse de traitement en base aqueuse se complétant toujours à 100 % massique.

9. Masse de traitement en base aqueuse selon l'une quelconque des revendications précédentes, **caractérisée en ce que**
la masse de traitement, en particulier la masse de traitement à dispersion présente une courbe d'écoulement, formée à partir des vitesses de cisaillement reportées sur l'abscisse et à partir des contraintes de cisaillement τ correspondantes reportées sur l'ordonnée, disposant d'une pente moyenne dans la plage de 0,020 à 0,080 et de préférence dans la plage de 0,030 à 0,050 Pa·s, déterminée sur la plage de vitesses de cisaillement de 20 à 100 s-1, et/ou d'une pente moyenne dans la plage de 0,020 à 0,080 et de préférence dans la plage de 0,025 à 0,070 Pa·s, déterminée sur la plage de vitesses de cisaillement de 20 à 200 s-1, et/ou d'une pente moyenne dans la plage de 0,012 à 0,060 et de préférence dans la plage de 0,014 à 0,040 Pa·s, déterminée sur la plage de vitesses de cisaillement de 20 à 400 s-1, et/ou d'une pente moyenne inférieure ou égale à 0,020 et de préférence inférieure ou égale à 0,015 Pa·s, déterminée sur la plage de vitesses de cisaillement de 1 200 à 1500 s-1, et/ou **en ce que** la contrainte de cisaillement τ maximale déterminée pour la masse de traitement, en particulier la masse de traitement à dispersion, ou **en ce que** la contrainte de cisaillement τ déterminée pour une vitesse de cisaillement de 1500 s-1 se trouve dans la plage de de 20 à 60 Pa, de préférence dans la plage de 25 à 50 Pa.

10. Masse de traitement en base aqueuse selon l'une quelconque des revendications précédentes, **caractérisée en ce que**
celle-ci représente un apprêt ou forme une composante de celui-ci.

11. Masse de traitement en base aqueuse selon l'une quelconque des revendications précédentes, **caractérisée en ce que**
celle-ci présente une valeur de pH dans la plage de 8,0 à 11,5, de préférence dans la plage de 8,5 à 11,5 et en particulier de préférence dans la plage de 9,0 à 11,50, ou est fixée à une valeur de pH dans la plage de 8,0 à 11,5, de préférence dans la plage de 8,5 à 11,5 et en particulier de préférence dans la plage de 9,0 à 11,5.

12. Masse de traitement en base aqueuse selon l'une quelconque des revendications précédentes, **caractérisée en ce que**
celle-ci est dépourvue de conservateurs pour pots et pour films, et de préférence dépourvue de conservateurs.

13. Masse de traitement en base aqueuse selon l'une quelconque des revendications précédentes, en particulier selon l'une quelconque des revendications 1 à 11, **caractérisée en ce que**
celle-ci contient des conservateurs pour films, de préférence des conservateurs pour films et aucun conservateur pour pots, et en particulier de préférence des conservateurs.

14. Composition aqueuse selon l'une quelconque des revendications précédentes, comprenant en outre
des charges et/ou des colorants, en particulier des pigments, ou en ce que celle-ci est dépourvue de charges et/ou de colorants, de préférence de pigments.

15. Peinture ou apprêt, obtenu(e) par, ou disponible avec, la masse de traitement en base aqueuse, en particulier la masse de traitement à dispersion, selon l'une quelconque des revendications précédentes.

16. Substrat revêtu, en particulier substrat minéral revêtu, obtenu par traitement d'un substrat, en particulier d'un substrat minéral, avec la masse de traitement en base aqueuse selon l'une quelconque des revendications 1 à 14, et application d'une peinture de couleur sur le substrat traité.

17. Utilisation de la masse de traitement, en particulier de la masse de traitement à dispersion, selon l'une quelconque des revendications 1 à 14 pour l'application par pulvérisation et/ou avec effet brouillard réduit, faible ou sans effet brouillard, sur une surface, avec un rouleau de peintre, une brosse, un système de pulvérisation ou un pinceau.

18. Utilisation de la masse de traitement, en particulier de la masse de traitement à dispersion, selon l'une quelconque des revendications 1 à 14 pour l'homogénéisation de supports, en particulier minéraux, à absorption irrégulière, en extérieur et/ou en intérieur et/ou pour l'homogénéisation de la conductivité capillaire de supports, en particulier minéraux, en extérieur et/ou en intérieur, avec propriétés de capillarité variables et/ou pour la consolidation de, et/ou amélioration de l'adhésion sur, des supports, en particulier minéraux, en extérieur et/ou en intérieur, et/ou pour garantir un effet de couleur uniforme de peintures de couleur sur des supports, en particulier minéraux, en extérieur et/ou en intérieur, les supports minéraux étant en particulier sélectionnés parmi le groupe se composant de revêtements de crépi, plaques de plâtre, plaques de plâtre cartonnées, briques non cuites, substrats en béton poreux, substrats en béton et substrats en briques silico-calcaires.

19. Utilisation de la masse de traitement, en particulier de la masse de traitement par dispersion, selon l'une quelconque des revendications 1 à 14, comprenant au moins un biocide, comme système de traitement d'assainissement en base aqueuse ou pour le traitement biocide de surfaces de bâtiments, en particulier de façades extérieures de bâtiments.
